# EUROPEAN PATENT APPLICATION

(11) **EP 4 706 833 A1**
(43) Date of publication of application: **11.03.2026**
(21) Application number: 24852158.5
(22) Date of filing: 29.07.2024
(51) Int. Cl.: B05C 5/02, B05C 11/10, H01M 4/04

(54) **SPACER SHIM AND SLOT DIE COATER**

(30) Priority: 04.08.2023 KR 20230102447
(71) Applicant: LG Energy Solution, Ltd., Seoul 07335 (KR)
(72) Inventor: PARK, Seung-Seo, Daejeon 34122 (KR); AHN, Byoung-Hoon, Daejeon 34122 (KR); JANG, Ji-Woong, Daejeon 34122 (KR); KIM, Min-Ju, Daejeon 34122 (KR); HWANG, Yu-Jin, Daejeon 34122 (KR)
(74) Representative: Goddar, Heinz J.
(86) International application number: PCT/KR2024/011049
(87) International publication number: WO 2025/033802

(57) **Abstract**

Disclosed is a spacer shim configured to coat a plurality of coating solutions simultaneously. The spacer shim according to one aspect of the present disclosure includes a shim body having a plate shape with a predetermined width, length, and thickness and including a first surface with the width and the length, wherein the shim body includes a flow path portion including an inlet trench formed as a groove indented in the thickness direction on the first surface and configured to allow the first coating solution to flow in along the thickness direction; and a discharge trench formed as a groove indented in the thickness direction on the first surface and configured to discharge the first coating solution along the length direction; and an inlet portion formed as a groove indented in the thickness direction at one end of the first surface in the width direction.

## Description

### TECHNICAL FIELD

The present disclosure relates to a spacer shim, a slot die coater, and a coating method using the same, and more specifically, to a spacer shim configured to coat a plurality of coating solutions simultaneously, a slot die coater including the same, and a coating method using the slot die coater.

This application is based on and claims priority from Korean Patent Application No. 10-2023-0102447, filed on August 4, 2023, with the Korean Intellectual Property Office, the disclosure of which is incorporated herein in its entirety by reference.

### BACKGROUND ART

A slot die coater is widely used to coat an active material or an insulating material on an electrode plate of a battery. The slot die coater includes a spacer shim interposed between two slot die blocks.

The spacer shim forms a flow path portion within the slot die coater. The flow path portion includes an inlet flow path portion through which a coating solution is introduced from the outside and an outlet flow path portion through which the coating solution is sprayed to the outside.

In the past, after coating an active material on an electrode plate, an insulating material was coated on an end of the active material coating area.

However, when such processes are performed simultaneously, the production speed of battery may be increased, and thus there is a need for a spacer shim capable of simultaneously coating an active material and an insulating material on an electrode plate.

### DISCLOSURE

### Technical Problem

The present disclosure is designed to solve the problems of the related art, and therefore the present disclosure is directed to providing a spacer shim configured to coat a plurality of coating solutions simultaneously.

The present disclosure is also directed to providing a slot die coater including an improved spacer shim.

The present disclosure is still also directed to providing a coating method using a slot die coater including an improved spacer shim.

### Technical Solution

A first spacer shim according to one aspect of the present disclosure for solving the above problem may include a shim body having a plate shape with a predetermined width, length, and thickness and including a first surface with the width and the length, wherein the shim body may include a flow path portion including an inlet trench formed as a groove indented in the thickness direction on the first surface and configured to allow the first coating solution to flow in along the thickness direction; and a discharge trench formed as a groove indented in the thickness direction on the first surface and configured to discharge the first coating solution along the length direction; and an inlet portion formed as a groove indented in the thickness direction at one end of the first surface in the width direction.

The inlet portion may be open toward the width and length directions of the shim body.

The flow path portion may be formed on the inner side of the first surface, and
the inlet portion may be formed further outward than the flow path portion along the width direction on the first surface.

The inlet portion may be formed further outward than the discharge trench along the width direction.

The inlet portion may be at least partially spaced apart from the discharge trench.

The inlet portion may be in contact with the discharge trench at an end along the length direction.

The depth of the inlet portion may be substantially the same as the depth of the discharge trench.

The inlet portion and the discharge trench may extend along the length direction, and
the inlet portion may have an expansion portion expanding in width in a direction where an end along the length direction faces the discharge trench.

In the inlet portion, an end along the length direction may gradually widen in width along the length direction.

The shim body may have a step portion formed by an area located in the direction where the first coating solution is discharged and meeting the first surface on a second surface forming the thickness, and an area adjacent thereto being indented inward along the length direction of the shim body.

The step portion may be provided in an area corresponding to the area where the inlet portion and the discharge trench are located.

A slot die coater according to another aspect of the present disclosure for solving the above problem may include a first spacer shim according to the present disclosure; a second spacer shim provided on one side of the first spacer shim; a first slot die block coupled to one side of the shim body to face the exposed surface of the flow path portion; and a second slot die block coupled to the other side of the shim body to face the first slot die block.

At least a portion of the second coating solution discharged from the second spacer shim may be configured to flow into the inlet portion of the adjacent first spacer shim.

The shim body may have a step portion formed by an area located in the direction where the first coating solution is discharged and meeting the first surface on a second surface forming the thickness, and an area adjacent thereto being indented inward along the length direction of the shim body.

The first coating solution discharged from the first spacer shim and the second coating solution discharged from the second spacer shim may be discharged in contact with each other at the step portion.

### Advantageous Effects

According to one aspect of the present disclosure, a plurality of coating solutions may be coated simultaneously. In particular, when a plurality of coating solutions need to be coated adjacent to each other, a first coating solution may be discharged from the discharge trench, and a second coating solution may be discharged from the inlet portion adjacent thereto. Therefore, the speed of the coating process may be improved by replacing a process of coating a plurality of coating solutions individually with a process of coating them simultaneously. Additionally, the problem of misalignment or difficulty in aligning along the direction where the coating solutions are discharged depending on the coating tolerance in the case of an individual coating process may be solved by a simultaneous coating.

According to another aspect of the present disclosure, the first coating solution discharged from the first spacer shim and the second coating solution discharged from the second spacer shim are discharged in contact with each other. Therefore, the accuracy of the coating process in which the first coating solution and the second coating solution should be coated side by side while being in contact with each other may be improved. In particular, the process in which the first coating solution and the second coating solution should be coated side by side while being in contact with each other requires an accurate alignment according to the direction where the coating solutions are discharged, so if this is not possible, there are problems such as the first coating solution and the second coating solution being coated without contacting each other or one coating solution encroaching on the part where the other coating solution should be coated, and this configuration of the present disclosure may solve these problems.

According to still another aspect of the present disclosure, the second coating solution discharged from the second spacer shim does not come into rapid contact with the first coating solution discharged from the first spacer shim, but rather comes into contact with a gradually widening width, thereby preventing the problem of mixing the first coating solution and the second coating solution due to rapid contact.

### DESCRIPTION OF DRAWINGS

FIG. 1 is a plan view showing a first spacer shim according to the present disclosure.
FIG. 2 is a perspective view showing a first spacer shim according to the present disclosure.
FIG. 3 is an enlarged view showing a partial area of FIG. 2.
FIG. 4 is an enlarged view showing a partial area of FIG. 3.
FIG. 5 is a front view showing a first spacer shim according to the present disclosure.
FIG. 6 is a part of a side view showing a first spacer shim according to the present disclosure.
FIG. 7 is a view showing a slot die coater according to the present disclosure.
FIG. 8 is a view showing a first spacer shim and a second spacer shim included in a slot die coater according to the present disclosure.
FIG. 9 is a view showing a slot die coater according to the present disclosure coating a substrate.

### BEST MODE

Hereinafter, preferred embodiments of the present disclosure will be described in detail with reference to the accompanying drawings. Since the accompanying drawings in this specification illustrate preferred embodiments of the present disclosure, and together with the detailed description of the present disclosure described later, serve to further understand the technical aspects of the present disclosure, the present disclosure should not be construed as limited to what is shown in such drawings. The same reference numerals refer to the same components. Additionally, in the drawings, the thickness, ratio, and dimensions of the components may be exaggerated for effective description of the technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms indicating directions as used herein such as upper, lower, left, right, front, and rear are used for convenience of description only, and it is obvious to those skilled in the art that the terms may change depending on the position of the stated element or an observer.

Therefore, the description proposed herein is just a preferable example for the purpose of illustrations only, not intended to limit the scope of the disclosure, so it should be understood that other equivalents and modifications could be made thereto without departing from the scope of the disclosure.

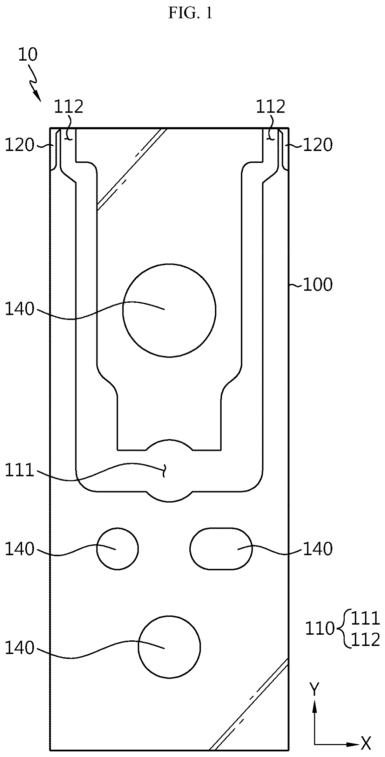

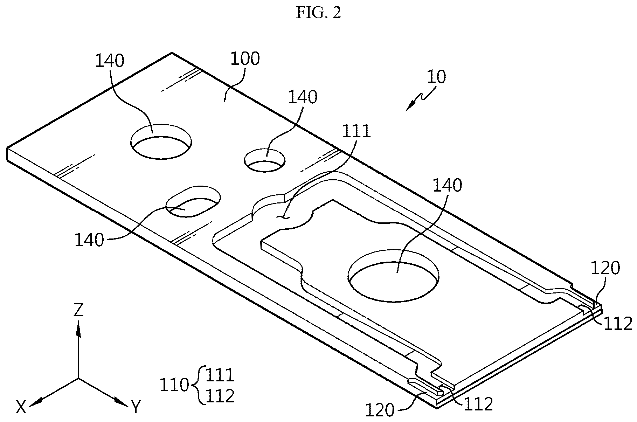

FIG. 1 is a plan view showing a first spacer shim 10 according to the present disclosure. FIG. 2 is a perspective view showing a first spacer shim 10 according to the present disclosure.

Referring to FIGS. 1 and 2, the first spacer shim 10 includes a shim body 100 including a flow path portion 110 and an inlet portion 120.

For convenience of description, a three-dimensional coordinate system is shown in the drawings. The extension direction of the X-axis is the width direction of the shim body 100, the extension direction of the Y-axis is the length direction of the shim body 100, and the extension direction of the Z-axis is the thickness direction of the shim body 100.

The shim body 100 may have a plate shape with a predetermined width, length, and thickness. The shim body 100 may include a first surface with the width and the length. The first surface may be located in the positive direction of the Z-axis and may be a surface parallel to the X-Y plane.

The shim body 100 may include a flow path portion 110 and an inlet portion 120.

The flow path portion 110 may include an inlet trench 111 and a discharge trench 112. The flow path portion 110 may be formed on the inner side of the first surface. The flow path portion 110 may be formed on the inner side of the first surface in the width direction. The flow path portion 110 may be formed on the inner side of the first surface in the length direction except for an end of the discharge trench 112 where the first coating solution is discharged.

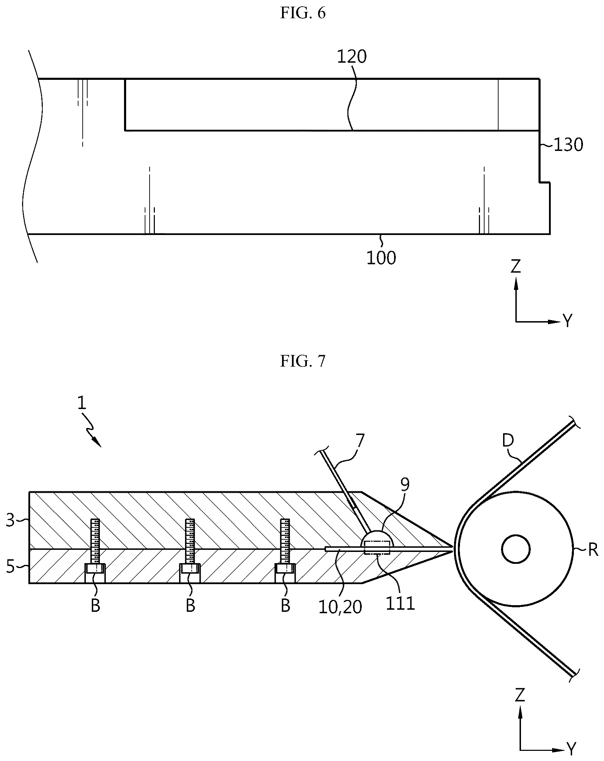

The inlet trench 111 may be formed as a groove indented in the thickness direction on the first surface and may be configured to allow the first coating solution to flow in along the thickness direction. Referring to FIG. 7 together with FIGS. 1 and 2, the inlet trench 111 may communicate with the coating solution supply unit 7 and the manifold 9 of the slot die coater 1 to be described later.

The discharge trench 112 may be formed as a groove indented in the thickness direction on the first surface and may be configured to discharge the first coating solution along the length direction. The discharge trench 112 may have an open end so that the first coating solution is discharged along the length direction of the shim body 100. The discharge trench 112 may be provided at one end of the shim body 100 in the length direction. The discharge trench 112 may communicate with the inlet trench 111. The first coating solution introduced through the inlet trench 111 may be discharged to the discharge trench 112.

The discharge trench 112 is provided on both sides of the shim body 100 in the width direction as shown in FIG. 1, and may have a left-right symmetrical structure based on the length direction of the shim body 100. However, the discharge trench 112 may be provided on only one side of the both sides of the shim body 100 in the width direction.

The inlet portion 120 may be formed as a groove indented in the thickness direction of the shim body 100 at one end of the first surface in the width direction. The inlet portion 120 may be open toward the width and length directions of the shim body 100. That is, the inlet portion 120 may be provided at an end of the first surface in the width and length directions, and may be in the form of a groove indented in the thickness direction of the shim body 100 to be open toward the width and length directions of the shim body 100. The inlet portion 120 may be open in the same length direction as the length direction of the shim body 100 in which the discharge trench 112 is open. At least a portion of the second coating solution discharged from the second spacer shim 20 of the slot die coater 1 to be described later may flow into the inlet portion 120.

The inlet portion 120 is provided on both sides of the shim body 100 in the width direction, as shown in FIG. 1, and may have a left-right symmetrical structure based on a central axis that passes through the center of the shim body 100 in the width direction and is parallel to the length direction of the shim body 100. However, unlike this, the inlet portion 120 may be provided on only one side of the shim body 100 in the width direction. The inlet portion 120 may be formed further outward than the discharge trench 112 along the width direction of the shim body 100.

According to this configuration of the present disclosure, a plurality of coating solutions may be coated simultaneously. In particular, when a plurality of coating solutions need to be coated adjacent to each other, a first coating solution may be discharged from the discharge trench 112, and a second coating solution may be discharged from the inlet portion 120 adjacent thereto. Therefore, the speed of the coating process may be improved by replacing a process of coating a plurality of coating solutions individually with a process of coating them simultaneously. Additionally, the problem of misalignment or difficulty in aligning along the direction where the coating solutions are discharged depending on the coating tolerance in the case of an individual coating process may be solved by a simultaneous coating.

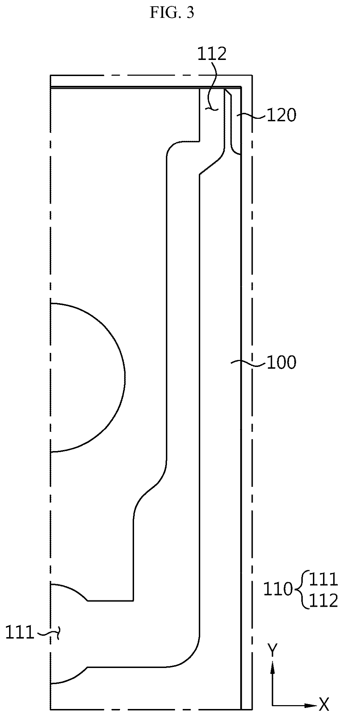

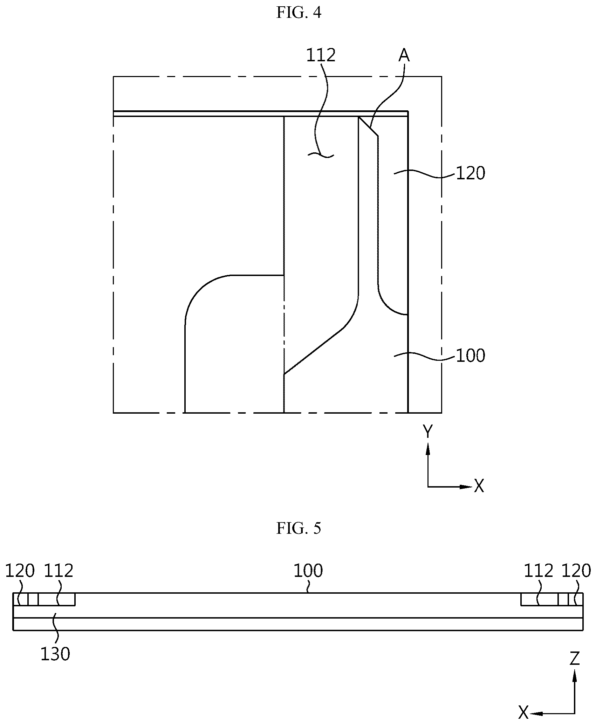

FIG. 3 is an enlarged view showing a partial area of FIG. 2. FIG. 4 is an enlarged view showing a partial area of FIG. 3.

A detailed structure of the inlet portion 120 will be described with reference to FIGS. 3 and 4.

The inlet portion 120 and the discharge trench 112 may extend along the length direction of the shim body 100. The inlet portion 120 may be at least partially spaced apart from the discharge trench 112. The inlet portion 120 may be in contact with the discharge trench 112 at an end along the length direction of the shim body 100. That is, the inlet portion 120 and the discharge trench 112 may be spaced apart along the length direction of the shim body 100 and may be in contact only at an end. However, unlike this, the inlet portion 120 and the discharge trench 112 may also be configured to meet further inward than one end of the length direction of the shim body 100. The inlet portion 120 and the discharge trench 112 are configured to be partially spaced apart from each other along the width direction of the shim body 100, and the width of the inlet portion 120 and/or the discharge trench 112 may be expanded so that they meet each other at an end or an area adjacent to an end along the length direction of the shim body 100.

According to this configuration of the present disclosure, the first coating solution discharged from the first spacer shim 10 and the second coating solution discharged from the second spacer shim 20 are discharged in contact with each other. Therefore, the accuracy of the coating process in which the first coating solution and the second coating solution should be coated side by side while being in contact with each other may be improved. In particular, the process in which the first coating solution and the second coating solution should be coated side by side while being in contact with each other requires an accurate alignment according to the direction where the coating solutions are discharged. However, when the alignment is not accurately achieved in this way, there are problems such as the first coating solution and the second coating solution being coated without contacting each other or one coating solution encroaching on the part where the other coating solution should be coated, and this configuration of the present disclosure may solve these problems.

Referring to FIGS. 3 and 4 again, the inlet portion 120 may have an expansion portion A expanding in width in a direction where an end along the length direction of the shim body 100 faces the discharge trench 112. The inlet portion 120 may have an expansion portion A that extends to have a constant width along the length direction of the shim body 100 and then expands in width at an end. The expansion portion A may have various structures, such as a structure in which the width is rapidly expanded in a multi-stage format or a structure in which the width is gradually expanded in a tapered manner. For example, as shown in FIG. 4, when an end of the inlet portion 120 along the length direction of the shim body 100 gradually widens in the width along the length direction of the shim body 100, the discharge width of the second coating solution discharged from the second spacer shim 20 is not rapidly expanded toward the first coating solution discharged from the first spacer shim 10, but is gradually expanded, thereby preventing the problem of the first coating solution and the second coating solution being mixed due to the rapid expansion of the discharge width of the first coating solution.

FIG. 5 is a front view showing a first spacer shim 10 according to the present disclosure.

Referring to FIG. 5, the depth of the inlet portion 120 may be substantially the same as the depth of the discharge trench 112. The depth of the inlet portion 120 along the thickness direction of the shim body 100 may be substantially the same as the depth of the discharge trench 112 along the thickness direction of the shim body 100. In this case, it is possible to prevent a problem in which the first coating solution discharged from the first spacer shim 10 and the second coating solution discharged from the second spacer shim 20 are discharged at different heights, so that one coating solution is coated while going under or rising above the other coating solution.

FIG. 6 is a part of a side view showing a first spacer shim 10 according to the present disclosure.

Referring to FIG. 6 together with FIGS. 2 and 5, the shim body 100 may have a step portion 130.

The step portion 130 may be positioned in the direction where the first coating solution is discharged. The step portion 130 may be formed in such a way that an area where the second surface forming the thickness of the shim body 100 meets the first surface and an area adjacent thereto are indented inward along the length direction of the shim body 100. The step portion 130 may be configured such that a portion located below along the thickness direction of the second surface (a direction parallel to the Z-axis) protrudes further outward along the length direction of the shim body 100 than a portion located above. The step portion 130 may be formed on the entire second surface along the width direction of the shim body 100. However, the step portion 130 may be provided only in an area corresponding to the area where the inlet portion 120 and the discharge trench 112 are located. That is, the step portion 130 may be provided only at one end and/or both ends of the shim body 100.

According to this configuration of the present disclosure, the first coating solution discharged from the discharge trench 112 and the second coating solution discharged from the inlet portion 120 may fall to the step portion 130 and be discharged in contact with each other. Compared to when the coating solution is directly discharged from the discharge trench 112 and the inlet portion 120, the coating solution falls downward along the thickness direction of the shim body 100 by gravity and is discharged, and thus the possibility that the first coating solution and the second coating solution are discharged without contacting each other may be significantly reduced.

Referring to FIGS. 1 and 2 again, the first spacer shim 10 may include a fastening hole 140 for coupling with the slot die coater 1 to be described later.

At least one fastening hole 140 may be provided to penetrate the shim body 100 so as not to overlap with the flow path portion 110.

The fastening hole 140 may be used when installing the first spacer shim 10 into the slot die coater 1. The inner circumferential surface of the fastening hole 140 may be provided with screw threads for bolt fastening. At least one fastening hole 140 may be provided in the inner area of the shim body 100. At least two fastening holes 140 may be provided in the inner area of the shim body 100.

FIG. 7 is a view showing a slot die coater 1 according to the present disclosure.

Referring to FIG. 7, the slot die coater 1 may include the first spacer shim 10 described above. Additionally, the slot die coater 1 may include a second spacer shim 20, a first slot die block 3, and a second slot die block 5.

The second spacer shim 20 may be provided on one side of the first spacer shim 10. The second spacer shim 20 may be provided on both sides of the first spacer shim 10. The second spacer shim 20 may be provided in an area that requires simultaneous coating of the first coating solution discharged from the first spacer shim 10 and the second coating solution discharged from the second spacer shim 20. When the second spacer shim 20 is provided on one side of the first spacer shim 10, the discharge trench 112 of the first spacer shim 10 located in the part where the second spacer shim 20 is not provided may be blocked so that the first coating solution does not come out.

The first slot die block 3 may be coupled to one side of the shim body 100 to face the exposed surface of the flow path portion 110.

The second slot die block 5 may be coupled to the other side of the shim body 100 to face the first slot die block 3.

The first slot die block 3 may include a coating solution supply unit 7 in communication with the inlet trench 111 of the first shim spacer. However, the coating solution supply unit 7 may be installed externally.

The detailed structure of the coating solution supply unit 7 is not shown, but for example, it may include a coating solution introduction chamber that is indented in the thickness direction (a direction parallel to the Z-axis) of the first slot die block 3, a coating solution introduction hole that communicates with the coating solution introduction chamber and is perforated in the thickness direction (a direction parallel to the Z-axis) of the first slot die block 3, and a coating solution supply pipe having one end connected to the coating solution introduction hole and the other end connected to a pump.

The slot die coater 1 may supply the coating solution using a plurality of pumps P1, P2. The number of the pumps may correspond to the number of the first spacer shims 10 and the second spacer shims 20. Each pump may independently supply the coating solution to each spacer shim through the coating solution supply unit 7. However, the number of a plurality of pumps P1, P2 is not necessarily limited to the number of the first spacer shims 10 and the second spacer shims 20, and for example, pumps supplying the coating solution to the second spacer shim may be one in communication with the whole.

The manifold 9 is provided in the first slot die block 3 or the second slot die block 5, and is configured to receive a coating solution in the internal space. For example, the manifold 9 is provided in the first slot die block 3 located above and has a hollow semicylindrical structure, with a semicircular outer peripheral surface located at the top and a rectangular outer peripheral surface located at the bottom to face the first spacer shim 10 and the second spacer shim 20. This manifold 9 is connected to the coating solution supply unit 7 to receive the coating solution. When the coating solution is filled in the manifold 9, the coating solution may flow along the first spacer shim 10 and the second spacer shim 20.

The first slot die block 3 and the second slot die block 5 may be coupled by at least one bolt fastening structure B.

The detailed structure of the bolt fastening structure B is not shown, but for example, it may include a bolt fastening hole formed in the first slot die block 3 and having screw threads formed on the inner circumferential surface, a bolt guide hole formed in the second slot die block 5 and guiding the insertion of a bolt from the outside, and a bolt inserted through the bolt guide hole and coupled to the bolt fastening hole.

The detailed structure of the bolt fastening structure B is not limited in this way. The bolt fastening hole may be formed in the second slot die block 5, and the bolt guide hole may be formed in the first slot die block 3. In addition, various bolt fastening structures B known in the art may be employed.

The coating solution discharged from the slot die coater 1 may be continuously discharged on the surface of the substrate D transferred by the roller R.

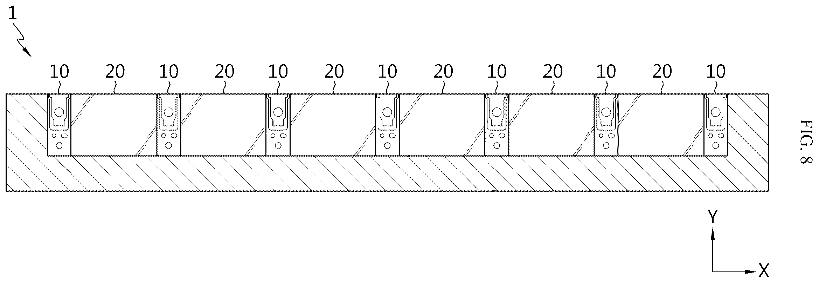

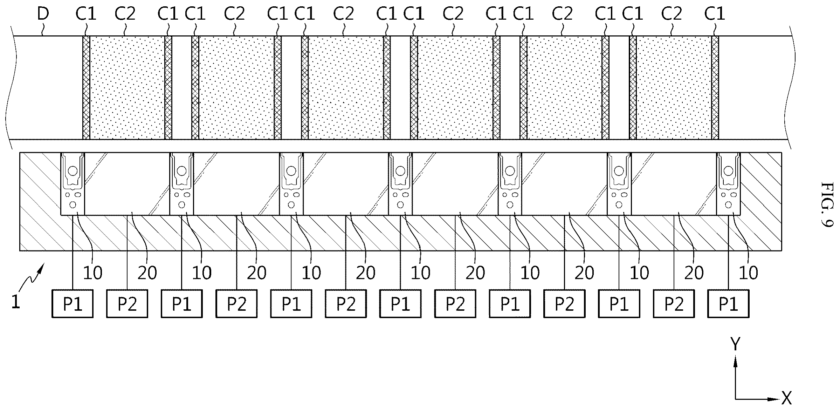

FIG. 8 is a view showing a first spacer shim 10 and a second spacer shim 20 included in a slot die coater 1 according to the present disclosure. FIG. 9 is a view showing a slot die coater 1 according to the present disclosure coating a substrate D.

Referring to FIGS. 8 and 9, the slot die coater 1 may include a plurality of first spacer shims 10 and second spacer shims 20. The slot die coater 1 may include seven first spacer shims 10 and six second spacer shims 20. The first spacer shims 10 and the second spacer shims 20 may be arranged at regular intervals along the X-axis direction.

The slot die coater 1 may simultaneously form a first coating layer C1 whose number is corresponding to the number of first spacer shims 10 * 2 and a second coating layer C2 whose number is corresponding to the number of second spacer shims 20 * 1 on the surface of the substrate D that advances in the Y-axis direction along the advancing direction of the substrate. However, the discharge trench 112 of the first spacer shim 10 located at the outermost side may be blocked.

According to this structure, at least a portion of the second coating solution discharged from the second spacer shim 20 flows to the inlet portion 120 of the adjacent first spacer shim 10, so that the first coating solution and the second coating solution may be coated simultaneously while in contact with each other. When the second coating layer C2 in the center and the first coating layers C1 in contact with the second coating layer C2 on both sides are referred to as one coating layer set, six coating layer sets are coated, and approximately the middle of the second coating layer C2 and the middle of the adjacent coating layer set may be cut to use twelve electrodes in the production process of the electrode assembly.

Hereinafter, a coating method using the slot die coater 1 will be described.

A coating method according to the present disclosure may include a step of preparing a substrate D having a pair of short sides and a pair of long sides extending between the pair of short sides; a step of preparing a slot die coater 1 according to the present disclosure; and a step in which the second coating solution discharged from the second spacer shim 20 at a predetermined interval on one surface of the substrate D along the long side direction (a direction parallel to the X-axis) using the slot die coater 1 forms a plurality of second coating layers C2, and a strip-shaped uncoated portion extending along the long side direction (a direction parallel to the X-axis) is formed between second coating layers C2 adjacent in the short side direction (a direction parallel to the Y-axis), and simultaneously, the first coating solution discharged from the first spacer shim 10 forms a first coating layer C1 that covers the boundary between each second coating layer C2 and the uncoated portion adjacent thereto with a predetermined width along the long side direction (a direction parallel to the X-axis). In this coating method, the substrate D may be a metal foil current collector, the first coating layer C1 may be an insulating coating layer, and the second coating layer C2 may be an active material coating layer.

As described above, the present disclosure has been described mainly with preferred embodiments with reference to the accompanying drawings, but it is apparent to those skilled in the art that many and various obvious modifications are possible from this description without departing from the scope of the present disclosure. Therefore, the scope of the present disclosure should be construed by the claims which are written to include examples of such many modifications.

## Claims

1. A first spacer shim, comprising:
a shim body having a plate shape with a predetermined width, length, and thickness and comprising a first surface with the width and the length,
wherein the shim body comprises:
a flow path portion comprising an inlet trench formed as a groove indented in the thickness direction on the first surface and configured to allow the first coating solution to flow in along the thickness direction; and a discharge trench formed as a groove indented in the thickness direction on the first surface and configured to discharge the first coating solution along the length direction; and
an inlet portion formed as a groove indented in the thickness direction at one end of the first surface in the width direction.

2. The first spacer shim according to claim 1,
wherein the inlet portion is open toward the width and length directions of the shim body.

3. The first spacer shim according to claim 1,
wherein the flow path portion is formed on the inner side of the first surface, and
the inlet portion is formed further outward than the flow path portion along the width direction on the first surface.

4. The first spacer shim according to claim 1,
wherein the inlet portion is formed further outward than the discharge trench along the width direction.

5. The first spacer shim according to claim 4,
wherein the inlet portion is at least partially spaced apart from the discharge trench.

6. The first spacer shim according to claim 5,
wherein the inlet portion is in contact with the discharge trench at an end along the length direction.

7. The first spacer shim according to claim 1,
wherein the depth of the inlet portion is substantially the same as the depth of the discharge trench.

8. The first spacer shim according to claim 1,
wherein the inlet portion and the discharge trench extend along the length direction, and
the inlet portion has an expansion portion expanding in width in a direction where an end along the length direction faces the discharge trench.

9. The first spacer shim according to claim 8,
wherein in the inlet portion, an end along the length direction gradually widens in width along the length direction.

10. The first spacer shim according to claim 1,
wherein the shim body has a step portion formed by an area located in the direction where the first coating solution is discharged and meeting the first surface on a second surface forming the thickness, and an area adjacent thereto being indented inward along the length direction of the shim body.

11. The first spacer shim according to claim 10,
wherein the step portion is provided in an area corresponding to the area where the inlet portion and the discharge trench are located.

12. A slot die coater, comprising:
a first spacer shim according to any one of claims 1 to 11;
a second spacer shim provided on one side of the first spacer shim;
a first slot die block coupled to one side of the shim body to face the exposed surface of the flow path portion; and
a second slot die block coupled to the other side of the shim body to face the first slot die block.

13. The slot die coater according to claim 12,
wherein at least a portion of the second coating solution discharged from the second spacer shim is configured to flow into the inlet portion of the adjacent first spacer shim.

14. The slot die coater according to claim 12,
wherein the shim body has a step portion formed by an area located in the direction where the first coating solution is discharged and meeting the first surface on a second surface forming the thickness, and an area adjacent thereto being indented inward along the length direction of the shim body.

15. The slot die coater according to claim 14,
wherein the first coating solution discharged from the first spacer shim and the second coating solution discharged from the second spacer shim are discharged in contact with each other at the step portion.
